# EUROPEAN PATENT SPECIFICATION

(11) **EP 4 507 224 B1**
(45) Date of publication and mention of the grant of the patent: **11.03.2026**
(21) Application number: 22936201.7
(22) Date of filing: 08.04.2022
(51) Int. Cl.: H04L 1/16, H04L 1/18, H04W 72/04, H04L 1/1607, H04L 1/1867

(54) **COMMUNICATION METHOD, APPARATUS, ELECTRONIC DEVICE, AND STORAGE MEDIUM**
KOMMUNIKATIONSVERFAHREN, VORRICHTUNG, ELEKTRONISCHE VORRICHTUNG UND SPEICHERMEDIUM
PROCÉDÉ DE COMMUNICATION, APPAREIL, DISPOSITIF ÉLECTRONIQUE, ET SUPPORT DE STOCKAGE

(43) Date of publication of application: 12.02.2025
(73) Proprietor: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2022/085959
(87) International publication number: WO 2023/193264

(56) References cited:
- WO-A1-2021/091199
- WO-A1-2021/126075
- WO-A1-2021/139681
- WO-A1-2021/141239
- CN-A- 113 114 430
- CN-A- 114 208 074

## Description

### TECHNICAL FIELD

Embodiments of the present invention relate to the field of mobile communication technologies, and more particularly relate to a communication method, an electronic device, and a storage medium.

### BACKGROUND

With the rapid development of the mobile communication technology, a wireless fidelity (Wi-Fi) technology has made a great progress in terms of transmission rate and throughput. At present, research contents of the Wi-Fi technology include, for example, a 320MHz bandwidth transmission, an aggregation and coordination of multiple frequency bands, etc. Main application scenarios of the Wi-Fi technology include, for example, a video transmission, an augmented reality (AR), a virtual reality (VR), etc.

Specifically, the aggregation and coordination of the multiple frequency bands refer to communication between devices at 2.4GHz, 5.8GHz, 6GHz and other frequency bands at the same time. For the scenario where the devices communicate at the multiple frequency bands at the same time, a new media access control (MAC) mechanism needs to be defined for management. In addition, the aggregation and coordination of the multiple frequency bands are expected to support a low-latency transmission.

At present, a maximum bandwidth supported in a technology of the aggregation and coordination of the multiple frequency bands is 320MHz (i.e. 160MHz + 160MHz). In addition, 240MHz (i.e. 160MHz + 80MHz) and other bandwidths supported by existing standards may also be supported.

In the Wi-Fi technology currently studied, 1024 MAC service data units (MSDUs) may be fed back in one link under an existing block acknowledgement (BA) mechanism; however, for a low-latency service, the existing BA mechanism takes a long time and may not be able to meet a low-latency transmission requirement.

WO 2021/126075 A1 relates to a first multi-link device configured to operate with a first plurality of affiliated stations, and the first multi-link device comprises: circuitry, which in operation, initiates setup of a block acknowledgement agreement with a second multi-link device that is configured to operate with a second plurality of affiliated stations, wherein a link has been established between each station of the first plurality of stations and a corresponding station of the second plurality of stations; and a transmitter, which in operation, transmits frames of a Traffic Identifier (TID) on one or more links to the second multi-link device based on the block acknowledgement agreement, and the first plurality of stations are configured to share a common transmit buffer that stores the frames of the TID to be transmitted to the second multi-link device and a common transmit buffer control to manage the transmission of the frames over the one or more links, and wherein each of the first plurality of stations is configured to maintain a per-link transmit buffer control to manage the transmission of the frames on a corresponding one of the one or more links.

WO 2021/139681 A1 relates to a method for determining a receiving state of a data frame, which comprises: a first multi-link device sends the data frame to a second multi-link device on multiple links; wherein the first multi-link device receives a block confirmation BA frame sent by the second multi-link device through a first link of the multiple links, and the BA frame carries a bit bitmap, and the bit bitmap is configured to indicate a receiving state of the data frame transmitted on the first link and configured to indicate a receiving state of the data frame transmitted on the second link among the multiple links; wherein the first multi-link device determines a receiving state of the data frame corresponding to a first bit based on a first time and a second time, where the first time is a sending time of the data frame corresponding to the first bit, and the second time is a receiving time of the BA frame; and the first bit is a bit corresponding to the data frame transmitted on the second link in the bit bitmap, and its value is a first value.

### SUMMARY

Embodiments of the present invention provide a communication method, a communication apparatus, an electronic device and a storage medium to solve a problem that an existing BA mechanism is difficult to meet a low-latency transmission requirement.

The present invention is defined by the appended claims.

In an aspect, an embodiment of the present invention provides a communication method, according to appended independent claim 1.

In another aspect, an embodiment of the present invention further provides a communication method, according to appended independent claim 5.

In another aspect, an embodiment of the present invention further provides an electronic device, which is a transmitter, according to appended independent claim 9.

In another aspect, an embodiment of the present invention further provides an electronic device, which is a receiver, according to appended independent claim 10.

An embodiment of the present invention further provides a computer-readable storage medium, according to appended independent claim 11.

In embodiments of the present invention, the transmitter first sends the first data frame in the first communication link with the receiver, and then sends the first BA Request frame corresponding to the first data frame in the second communication link with the receiver. A BA feedback is performed while transmitting the first data frame, thereby shortening a transmission time, meeting a transmission requirement of a low-latency service, improving a spectrum utilization, and adapting to a high-density communication environment.

Additional aspects and advantages of embodiments of the present invention will be given in part in the following descriptions, which will become apparent from the following descriptions, or will be learned from the practice of the present invention.

### BRIEF DESCRIPTION OF THE DRAWINGS

In order to clearly illustrate the technical solutions in embodiments of the present invention, the accompanying drawings to be used in the description of embodiments of the present invention will be briefly introduced below. Apparently, the drawings in the following description only show some embodiments of the present invention. For those of ordinary skill in the art, other drawings may also be obtained according to these drawings without any creative effort.
FIG. 1 is a first flowchart of a communication method according to an embodiment of the present invention.
FIG. 2 is a second flowchart of a communication method according to an embodiment of the present invention.
FIG. 3 is a third flowchart of a communication method according to an embodiment of the present invention.
FIG. 4 is a fourth flowchart of a communication method according to an embodiment of the present invention.
FIG. 5 is a fifth flowchart of a communication method according to an embodiment of the present invention.
FIG. 6 is a sixth flowchart of a communication method according to an embodiment of the present invention.
FIG. 7 is a first schematic block diagram of a communication apparatus according to an embodiment of the present invention.
FIG. 8 is a second schematic block diagram of a communication apparatus according to an embodiment of the present invention.
FIG. 9 is a schematic block diagram of an electronic device according to an embodiment of the present invention.

### DETAILED DESCRIPTION

The term "and/or" in embodiments of the present invention describes an association relationship of associated objects, indicating that three relationships may be exist. For example, A and/or B may represent three situations where: A exists alone, A and B exist simultaneously, and B exists alone. The character "/" generally represents that objects associated before and after the character are in an "or" relationship.

In embodiments of the present invention, the term "a/the plurality of" refers to two or more than two, and other quantifiers are similar thereto.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of devices and methods consistent with some aspects of the present invention as recited in the appended claims.

Terms used in the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. For example, as used herein, the term "if" may be construed to mean "when", "upon" or "in response to determining" depending on the context.

The technical solutions in embodiments of the present invention will be described clearly and completely below with reference to the accompanying drawings in embodiments of the present invention. Apparently, the described embodiments are only some embodiments of the present invention, rather than all embodiments of the present invention. All other embodiments obtained by those of ordinary skill in the art based on embodiments of the present invention without making creative works belong to the protection scope of the present invention.

Embodiments of the present invention provide a communication method, a communication apparatus, an electronic device, and a storage medium to solve a problem that an existing BA mechanism is difficult to meet a low-latency transmission requirement.

The method and the apparatus are based on the same application concept. Since the method and the apparatus solve the problem in a similar principle, regarding an implementation of the apparatus and the method, reference may be made to each other, and repeated parts thereof will not be elaborated.

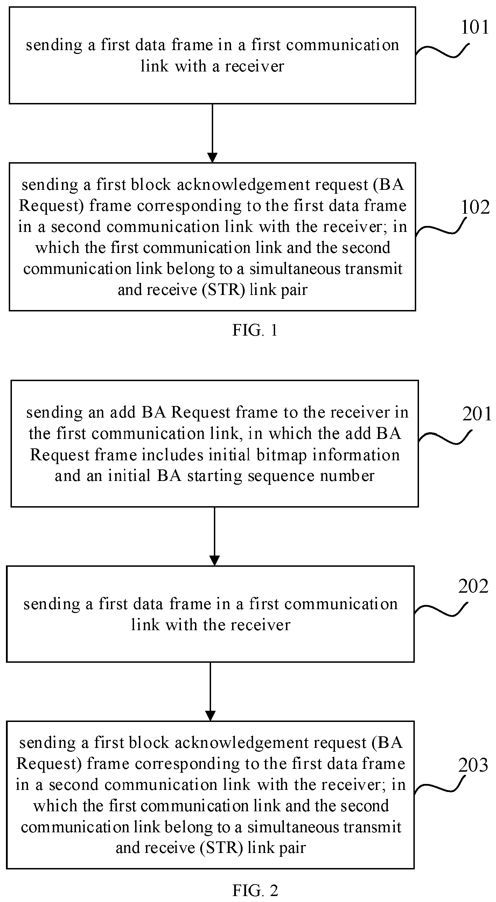

As shown in FIG. 1, an embodiment of the present invention provides a communication method. Optionally, the method may be performed by an electronic device. The electronic device is an initiator, such as an access point (AP) device or a station (STA) device. The method may include steps as follows.

In step 101, a first data frame is sent in a first communication link with a receiver.

In a multi-link scenario, in order to improve a spectrum utilization and adapt to a high-density communication environment, two communication manners, i.e. a non-simultaneous transmit and receive (NSTR) and a simultaneous transmit and receive (STR), are introduced. In an STR scenario, a transmission and a reception may be performed respectively and simultaneously in different communication links, and there is no interference between transmissions of individual communication links. However, under normal circumstances, if a BA feedback is performed after a transmission of 1024 consecutive MSDUs is completed, the transmitter needs to perform retransmission if the 1024 consecutive MSDUs are not received correctly, which will result in a longer transmission time. Therefore, in an embodiment of the present invention, the transmitter sends the first data frame in the first communication link (communication link, i.e., Link) with the receiver, and the first data frame may be, for example, an aggregation of the MSDUs (A-MSDU) or an aggregation of physical protocol data units (PPDU). The PPDU includes a physical layer header preamble (PLCP header preamble) and a MAC protocol data unit (MPDU) and/or an aggregation of the MPDUs (A-MPDU).

Optionally, the first communication link is a communication link for establishing a BA mechanism (a negotiation of an initial BA length) between the transmitter and the receiver.

In step 102, a first block acknowledgement request (BA Request) frame corresponding to the first data frame is sent in a second communication link with the receiver; in which the first communication link and the second communication link belong to a simultaneous transmit and receive (STR) link pair.

The first communication link and the second communication link belong to a simultaneous transmit and receive (STR) link pair. When the transmitter sends the first data frame in the first communication link, and the first BA Request frame is sent in the second communication link at the same time, the first BA Request frame is configured to request the receiver to perform the BA feedback on a received first data frame. In this way, the receiver may perform the BA feedback while the transmitter is transmitting the data frame, without waiting for a completion of transmission of the 1024 MSDUs, thereby shortening a transmission time.

In embodiments of the present invention, the transmitter first sends the first data frame in the first communication link with the receiver, and then sends the first BA Request frame corresponding to the first data frame in the second communication link with the receiver. A BA feedback is performed while transmitting the first data frame, thereby shortening the transmission time, meeting a transmission requirement of a low-latency service, improving a spectrum utilization, and adapting to a high-density communication environment. Embodiments of the present invention solve a problem that an existing BA mechanism is difficult to meet a low-latency transmission requirement.

Referring to FIG. 2, an embodiment of the present invention further provides a communication method. Optionally, the method may be performed by an electronic device. The electronic device is an initiator, such as an AP or an STA. The method may include steps as follows.

In step 201, an add BA Request frame is sent to the receiver in the first communication link, and the add BA Request frame includes initial bitmap information and an initial BA starting sequence number; in which the initial bitmap information indicates a size of a BA buffer.

When establishing a BA mechanism (a negotiation of an initial BA length) with the receiver, the initiator first sends the add BA Request frame to the receiver in the first communication link, and the add BA Request frame carries the initial bitmap information. The initial bitmap information is the size of the BA buffer, that is, an amount of data accommodated in the BA buffer, such as 32 bytes, 64 bytes or 128 bytes. In addition, the add BA Request frame also includes the initial BA starting sequence number, the starting sequence number, and the starting sequence number is configured to identify a starting position where the transmitter sends the data frame.

In step 202, a first data frame is sent in a first communication link with the receiver.

The transmitter sends the first data frame in the first communication link with the receiver. The first data frame may be, for example, an AMSDU or an aggregation of physical protocol data unit (APPDU).

In step 203, a first block acknowledgement request (BA Request) frame corresponding to the first data frame is sent in a second communication link with the receiver; in which the first communication link and the second communication link belong to a simultaneous transmit and receive (STR) link pair.

The first communication link and the second communication link belong to a simultaneous transmit and receive (STR) link pair. When the transmitter sends the first data frame in the first communication link, the first BA Request frame is sent in the second communication link at the same time. In this way, the receiver may perform the BA feedback while the transmitter is transmitting the data frame, without waiting for a completion of transmission of 1024 MSDUs, thereby shortening a transmission time.

In an optional embodiment, after sending the add BA Request frame to the receiver in the first communication link, the method includes:
receiving an add BA response frame sent by the receiver.

After receiving the add BA Request frame, the receiver will feed back the add BA response frame to the transmitter, identifying that it supports the add BA Request frame.

In an optional embodiment, the first BA Request frame includes a first BA starting sequence number, and/or first bitmap information.

The first BA starting sequence number is the same as the initial BA starting sequence number; in a first transmission after the BA mechanism is established, the BA starting sequence number in the BA Request frame is the same as the initial BA starting sequence number.

The number of bytes indicated by the first bitmap information is less than that indicated by the initial bitmap information, that is, the first bitmap information is less than a length of the buffer size negotiated in establishing the BA mechanism. For example, in establishing the BA mechanism, a length of the BA bitmap is 128 bytes, and the first bitmap information indicates that a required feedback length is 32 bytes. The receiver may feed back a receiving status of the A-MSDU with a length of 32 bytes that have been transmitted, without having to wait for a completion of transmission of 128 bytes before performing the BA feedback. In this way, the bytes indicated by the initial bitmap information are transmitted multiple times, and the BA feedback is performed for each transmitted data frame to shorten an overall transmission time.

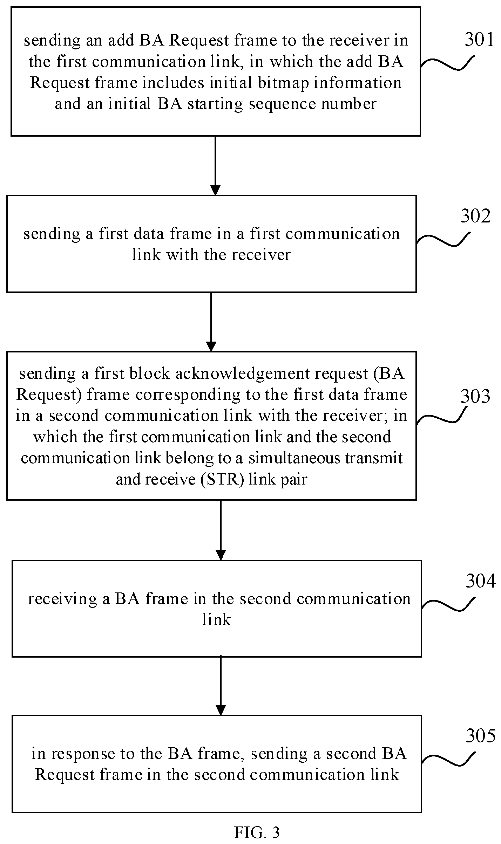

Referring to FIG. 3, an embodiment of the present invention further provides a communication method. Optionally, the method may be performed by an electronic device. The electronic device is an initiator, such as an AP or an STA. The method may include steps as follows.

In step 301, an add BA Request frame is sent to the receiver in the first communication link, and the add BA Request frame includes initial bitmap information and an initial BA starting sequence number; in which the initial bitmap information indicates a size of a BA buffer.

In step 302, a first data frame is sent in a first communication link with the receiver.

In step 303, a first block acknowledgement request (BA Request) frame corresponding to the first data frame is sent in a second communication link with the receiver; in which the first communication link and the second communication link belong to a simultaneous transmit and receive (STR) link pair.

In step 304, a BA frame is received in the second communication link.

The transmitter receives the BA frame fed back by the receiver, determines whether the receiver has successfully received all contents of the first data frame according to a feedback of the BA frame, and resends the BA Request frame of the data frame that was not successfully received, i.e., a second BA Request frame, in the second communication link, as shown in step 305. It is understandable that if all contents of the first data frame are successfully received, there is no need to resend it.

In step 305, in response to the BA frame, a second BA Request frame is sent in the second communication link.

In an optional embodiment, the second BA Request frame includes a second BA starting sequence number; and/or second bitmap information.

The second BA starting sequence number is a sum of the initial BA starting sequence number and the initial bitmap information, that is, a value of a starting sequence number in the second BA Request frame is a sum of the BA bitmap length in the BA Request frame sent for a first time and a value of the starting sequence number in the BA Request frame sent for the first time.

The number of bytes indicated by the second bitmap information is less than that indicated by the initial bitmap information. For example, in establishing the BA mechanism, the length of the BA bitmap is 128 bytes, and the second bitmap information indicates that a required feedback length may be 32 bytes or 64 bytes; on the other hand, if the first bitmap information indicates that the required feedback length is 32 bytes, then the starting sequence number in the second BA Request frame is 33^{th}, i.e. (32 + 1)^{th}. In this way, the bytes indicated by the initial bitmap information are transmitted multiple times, and the BA feedback is performed for each transmitted data frame to shorten an overall transmission time.

In embodiments of the present invention, the transmitter first sends the first data frame in the first communication link with the receiver, and then sends the first BA Request frame corresponding to the first data frame in the second communication link with the receiver. A BA feedback is performed while transmitting the first data frame, thereby shortening the transmission time, meeting a transmission requirement of a low-latency service, improving a spectrum utilization, and adapting to a high-density communication environment.

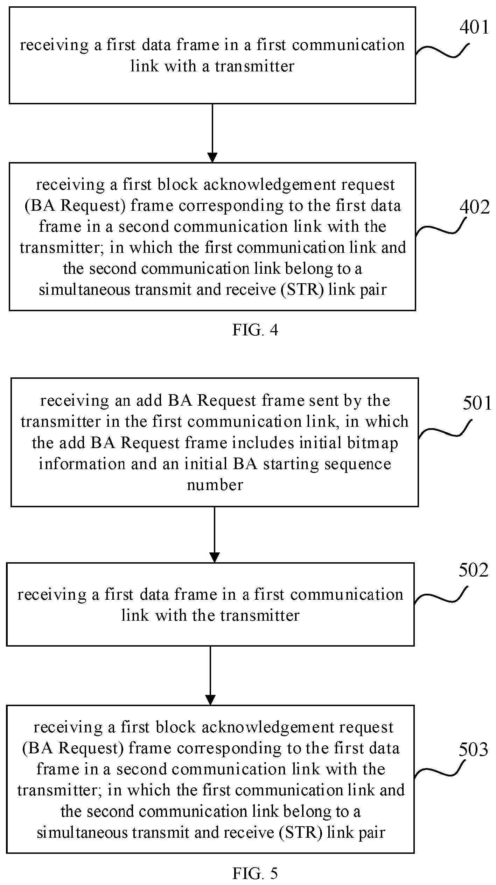

Referring to FIG. 4, an embodiment of the present invention further provides a communication method. Optionally, the method may be performed by an electronic device. The electronic device is a receiver, such as an AP or an STA. The method may include steps as follows.

In step 401, a first data frame is received in a first communication link with a transmitter.

In a multi-link scenario, in order to improve a spectrum utilization and adapt to a high-density communication environment, two communication manners, i.e. an NSTR and an STR, are introduced. In an STR scenario, a transmission and a reception may be performed respectively and simultaneously in different communication links, and there is no interference between transmissions of individual communication links. However, under normal circumstances, if a BA feedback is performed after a transmission of 1024 consecutive MSDUs is completed, the transmitter needs to perform retransmission if the 1024 consecutive MSDUs are not received correctly, which will result in a longer transmission time. Therefore, in an embodiment of the present invention, the transmitter sends the first data frame in the first communication link with the receiver, and the receiver receives the first data frame in the first communication link with the transmitter. The first data frame may be, for example, an AMSDU or an APPDU.

Optionally, the first communication link is a communication link for establishing a BA mechanism (a negotiation of an initial BA length) between the transmitter and the receiver.

In step 402, a first block acknowledgement request (BA Request) frame corresponding to the first data frame is received in a second communication link with the transmitter; in which the first communication link and the second communication link belong to a simultaneous transmit and receive (STR) link pair.

The first communication link and the second communication link belong to a simultaneous transmit and receive (STR) link pair. The receiver receives the first data frame in the first communication link with the transmitter, and receives the first BA Request frame in the second communication link at the same time, and subsequently performs the BA feedback in the second communication link. In this way, the receiver may perform the BA feedback while the transmitter is transmitting the data frame, without waiting for a completion of transmission of the 1024 MSDUs, thereby shortening a transmission time.

In embodiments of the present invention, the receiver receives the first data frame in the first communication link with the transmitter; receives the first block acknowledgment request (BA Request) frame corresponding to the first data frame in the second communication link with the transmitter; and performs a BA feedback while transmitting the first data frame, thereby shortening the transmission time, meeting a transmission requirement of a low-latency service, improving a spectrum utilization, and adapting to a high-density communication environment. Embodiments of the present invention solve a problem that an existing BA mechanism is difficult to meet a low-latency transmission requirement.

Referring to FIG. 5, an embodiment of the present invention further provides a communication method. Optionally, the method may be performed by an electronic device. The electronic device is a receiver, such as an AP or an STA. The method may include steps as follows.

In step 501, an add BA Request frame sent by the transmitter is received in the first communication link, and the add BA Request frame includes initial bitmap information and an initial BA starting sequence number; in which the initial bitmap information indicates a size of a BA buffer.

When establishing a BA mechanism (a negotiation of an initial BA length) with the transmitter, the receiver first receives the add BA Request frame sent by the transmitter in the first communication link, and obtains the initial bitmap information carried in the add BA Request frame. The initial bitmap information is the size of the BA buffer, that is, an amount of data accommodated in the BA buffer, such as 32 bytes, 64 bytes or 128 bytes. In addition, the add BA Request frame also includes the initial BA starting sequence number, the starting sequence number, and the starting sequence number identifies a starting position where the transmitter sends the data frame.

In step 502, a first data frame is received in a first communication link with the transmitter.

The receiver receives the first data frame in the first communication link with the transmitter. The first data frame may be, for example, an AMSDU or an APPDU.

In step 503, a first block acknowledgement request (BA Request) frame corresponding to the first data frame is received in a second communication link with the transmitter; in which the first communication link and the second communication link belong to a simultaneous transmit and receive (STR) link pair.

The receiver receives the first data frame in the first communication link with the transmitter, and receives the first BA Request frame in the second communication link at the same time, and subsequently performs the BA feedback in the second communication link. In this way, the receiver may perform the BA feedback while the transmitter is transmitting the data frame, without waiting for a completion of transmission of 1024 MSDUs, thereby shortening a transmission time.

In an optional embodiment, after receiving the add BA Request frame sent by the transmitter in the first communication link, the method includes:
sending an add BA response frame to the receiver.

After receiving the add BA Request frame, the receiver will feed back the add BA response frame to the transmitter, identifying that it supports the add BA Request frame.

In an optional embodiment, the first BA Request frame includes a first BA starting sequence number, and/or first bitmap information.

The first BA starting sequence number is the same as the initial BA starting sequence number; in a first transmission after the BA mechanism is established, the BA starting sequence number in the BA Request frame is the same as the initial BA starting sequence number.

The number of bytes indicated by the first bitmap information is less than that indicated by the initial bitmap information, that is, the first bitmap information is less than a length of the buffer size negotiated in establishing the BA mechanism. For example, in establishing the BA mechanism, a length of the BA bitmap is 128 bytes, and the first bitmap information indicates that a required feedback length is 32 bytes. The receiver may feed back a receiving status of the A-MSDU with a length of 32 bytes that have been transmitted, without having to wait for a completion of transmission of 128 bytes before performing the BA feedback. In this way, the bytes indicated by the initial bitmap information are transmitted multiple times, and the BA feedback is performed for each transmitted data frame to shorten an overall transmission time.

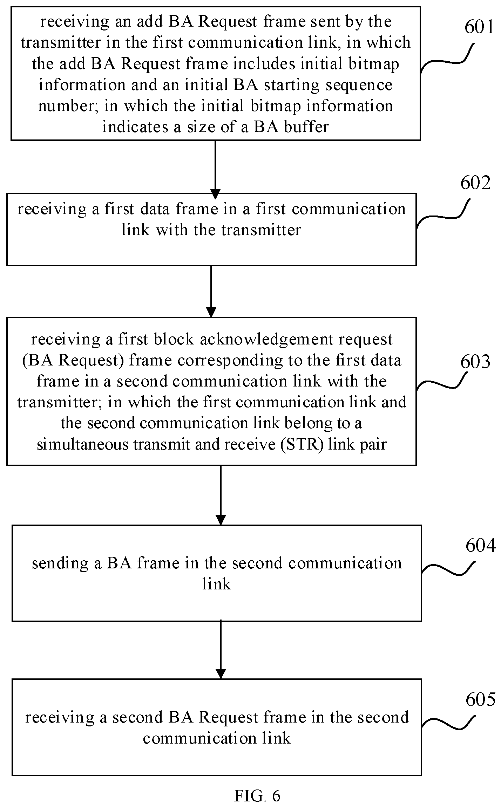

Referring to FIG. 6, an embodiment of the present invention further provides a communication method. Optionally, the method may be performed by an electronic device. The electronic device is a receiver, such as an AP or an STA. The method may include steps as follows.

In step 601, an add BA Request frame sent by the transmitter is received in the first communication link, and the add BA Request frame includes initial bitmap information and an initial BA starting sequence number; in which the initial bitmap information indicates a size of a BA buffer.

In step 602, a first data frame is received in a first communication link with the transmitter.

In step 603, a first block acknowledgement request (BA Request) frame corresponding to the first data frame is received in a second communication link with the transmitter; in which the first communication link and the second communication link belong to a simultaneous transmit and receive (STR) link pair.

In step 604, a BA frame is sent in the second communication link.

The receiver feeds back the BA frame in the second communication link, and indicates to the transmitter via the BA frame contents of the first data frame successfully received by the receiver. If all contents of the first data frame are not completely received, the transmitter will resend the BA Request frame of the data frame that was not successfully received, i.e., a second BA Request frame, and the receiver will receive the BA Request frame again, as shown in step 605. It is understandable that if all contents of the first data frame are successfully received, there is no need to resend it.

In step 605, a second BA Request frame is received in the second communication link.

In an optional embodiment, the second BA Request frame includes a second BA starting sequence number; and/or second bitmap information.

The second BA starting sequence number is a sum of the initial BA starting sequence number and the initial bitmap information, that is, a value of a starting sequence number in the second BA Request frame is a sum of the BA bitmap length in the BA Request frame sent for a first time and a value of the starting sequence number in the BA Request frame sent for the first time.

The number of bytes indicated by the second bitmap information is less than that indicated by the initial bitmap information. For example, in establishing the BA mechanism, the length of the BA bitmap is 128 bytes, and the second bitmap information indicates that a required feedback length may be 32 bytes or 64 bytes; on the other hand, if the first bitmap information indicates that the required feedback length is 32 bytes, then the starting sequence number in the second BA Request frame is 33^{th}, i.e. (32 + 1)^{th}. In this way, the bytes indicated by the initial bitmap information are transmitted multiple times, and the BA feedback is performed for each transmitted data frame to shorten an overall transmission time.

In embodiments of the present invention, the receiver receives the first data frame in the first communication link with the transmitter; receives the first block acknowledgment request (BA Request) frame corresponding to the first data frame in the second communication link with the transmitter; and performs a BA feedback while transmitting the first data frame, thereby shortening the transmission time, meeting a transmission requirement of a low-latency service, improving a spectrum utilization, and adapting to a high-density communication environment.

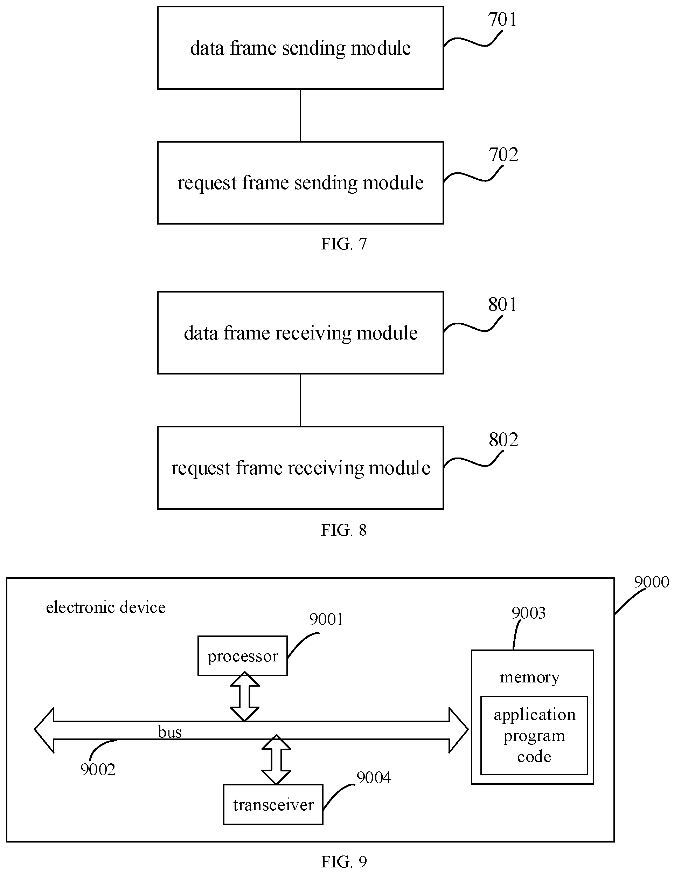

Referring to FIG. 7, based on the same principle as the method provided in embodiments of the present invention, an embodiment of the present invention further provides an electronic device, which is a transmitter, and includes:
a data frame sending module 701 configured to send a first data frame in a first communication link with a receiver; and
a request frame sending module 702 configured to send a first block acknowledgement request (BA Request) frame corresponding to the first data frame in a second communication link with the receiver.

The first communication link and the second communication link belong to a simultaneous transmit and receive (STR) link pair.

Optionally, in an embodiment of the present invention, the electronic device includes:
a request sending module configured to send an add BA Request frame to the receiver in the first communication link.

The add BA Request frame includes initial bitmap information and an initial BA starting sequence number; in which the initial bitmap information indicates a size of a BA buffer.

Optionally, in an embodiment of the present invention, the electronic device includes:
a response receiving module configured to receive an add BA response frame sent by the receiver.

Optionally, in an embodiment of the present invention, the first BA Request frame includes:
a first BA starting sequence number; and/or
first bitmap information.

The first BA starting sequence number is the same as the initial BA starting sequence number. The number of bytes indicated by the first bitmap information is less than that indicated by the initial bitmap information.

Optionally, in an embodiment of the present invention, the electronic device includes:
a first BA receiving module configured to receive a BA frame in the second communication link; and
a first BA sending module configured to, in response to the BA frame, send a second BA Request frame in the second communication link.

Optionally, in an embodiment of the present invention,
the second BA Request frame includes:
a second BA starting sequence number; and/or
second bitmap information.

The second BA starting sequence number is a sum of the initial BA starting sequence number and the initial bitmap information. The number of bytes indicated by the second bitmap information is less than that indicated by the initial bitmap information.

In embodiments of the present invention, the data frame sending module 701 first sends the first data frame in the first communication link with the receiver, and then the request frame sending module 702 sends the first BA Request frame corresponding to the first data frame in the second communication link with the receiver. A BA feedback is performed while transmitting the first data frame, thereby shortening the transmission time, meeting a transmission requirement of a low-latency service, improving a spectrum utilization, and adapting to a high-density communication environment.

An embodiment of the present invention further provides a communication apparatus, which is applied to a transmitter, and includes:
a first sending module configured to send a first data frame in a first communication link with a receiver; and
a second sending module configured to send a first block acknowledgement request (BA Request) frame corresponding to the first data frame in a second communication link with the receiver; in which the first communication link and the second communication link belong to a simultaneous transmit and receive (STR) link pair.

The apparatus further includes other modules of the electronic device in the aforementioned embodiments, which will not be described in detail here.

Referring to FIG. 8, based on the same principle as the method provided in embodiments of the present invention, an embodiment of the present invention further provides an electronic device, which is a receiver, such as an AP or an STA, and includes:
a data frame receiving module 801 configured to receive a first data frame in a first communication link with a transmitter; and
a request frame receiving module 802 configured to receive a first block acknowledgement request (BA Request) frame corresponding to the first data frame in a second communication link with the transmitter.

The first communication link and the second communication link belong to a simultaneous transmit and receive (STR) link pair.

Optionally, in an embodiment of the present invention, the electronic device includes:
a request receiving module configured to receive an add BA Request frame sent by the transmitter in the first communication link.

The add BA Request frame includes initial bitmap information and an initial BA starting sequence number; in which the initial bitmap information indicates a size of a BA buffer.

Optionally, in an embodiment of the present invention, the electronic device includes:
a response sending module configured to send an add BA response frame to the receiver.

Optionally, in an embodiment of the present invention, the first BA Request frame includes:
a first BA starting sequence number; and/or
first bitmap information.

The first BA starting sequence number is the same as the initial BA starting sequence number. The number of bytes indicated by the first bitmap information is less than that indicated by the initial bitmap information.

Optionally, in an embodiment of the present invention, the electronic device includes:
a second BA receiving module configured to send a BA frame in the second communication link; and
a second BA sending module configured to receive a second BA Request frame in the second communication link.

Optionally, in an embodiment of the present invention, the second BA Request frame includes:
a second BA starting sequence number; and/or
second bitmap information.

The second BA starting sequence number is a sum of the initial BA starting sequence number and the initial bitmap information. The number of bytes indicated by the second bitmap information is less than that indicated by the initial bitmap information.

In embodiments of the present invention, the data frame receiving module 801 receives the first data frame in the first communication link with the transmitter; the request frame receiving module 802 receives the first block acknowledgment request (BA Request) frame corresponding to the first data frame in the second communication link with the transmitter; and a BA feedback is performed while transmitting the first data frame, thereby shortening the transmission time, meeting a transmission requirement of a low-latency service, improving a spectrum utilization, and adapting to a high-density communication environment.

An embodiment of the present invention further provides a communication apparatus, which is applied to a receiver, and includes:
a first receiving module configured to receive a first data frame in a first communication link with a transmitter; and
a second receiving module configured to receive a first block acknowledgement request (BA Request) frame corresponding to the first data frame in a second communication link with the transmitter; in which the first communication link and the second communication link belong to a simultaneous transmit and receive (STR) link pair.

The apparatus further includes other modules of the electronic device in the aforementioned embodiments, which will not be described in detail here.

In an optional embodiment, an embodiment of the present invention further provides an electronic device, as shown in FIG. 9. The electronic device 9000 shown in FIG. 9 may be a server, including: a processor 9001 and a memory 9003. The processor 9001 and the memory 9003 are connected, for example, via a bus 9002. Optionally, the electronic device 9000 may further include a transceiver 9004. It should be noted that in actual applications, the number of the transceivers 9004 is not limited to one, and the structure of the electronic device 9000 does not constitute a limitation on the embodiments of the disclosure.

The processor 9001 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 9001 may implement or execute various exemplary logical blocks, modules, and circuits described in conjunction with the contents of the present invention. The processor 9001 may also be a combination that implements computing functions, such as a combination of one or more microprocessors, a combination of a DSP and a microprocessor, etc.

The bus 9002 may include a path to transmit information between the above components. The bus 9002 may be a peripheral component interconnect (PCI) bus, an extended industry standard architecture (EISA) bus, or the like. The bus 9002 can be divided into an address bus, a data bus, a control bus, etc. For ease of representation, FIG. 9 illustrates only one thick line, but this does not mean that there is only one bus or one type of bus.

The memory 9003 may be a read only memory (ROM) or other types of static storage devices that may store static information and instructions, or a random access memory (RAM) or other types of dynamic storage devices that may store information and instructions; and the memory 9003 may also be an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store the desired program codes in the form of instructions or data structures and may be accessed by a computer, but is not limited to this.

The memory 9003 is configured to store application program codes for executing the solution of the present invention, and the execution is controlled by the processor 9001. The processor 9001 is used to execute the application program codes stored in the memory 9003 to implement the contents shown in the aforementioned method embodiments.

The electronic device includes, but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc.; and a fixed terminal such as a digital television (TV), a desktop computer, etc. The electronic device shown in FIG. 9 is merely an example and should not limit the functions and use scope of the embodiments of the disclosure in any way.

The server provided in the present invention may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution network (CDN), as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the present invention.

An embodiment of the present invention provides a computer-readable storage medium, on which a computer program is stored. When the computer program runs on a computer, the computer may execute the corresponding contents in the aforementioned method embodiments.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation for the execution of these steps, and these steps may be executed in other orders. Moreover, at least some of the steps in the flowchart of the accompanying drawings may include a plurality of sub-steps or a plurality of stages. These sub-steps or stages are not necessarily executed at the same time, but may be executed at different times. The order of execution of these steps is not necessarily sequential, but these steps may be executed in turn or alternately with other steps or at least some of sub-steps or stages of other steps.

It should be noted that the above-mentioned computer-readable medium in the present invention may be a computer-readable signal medium, or a computer-readable storage medium, or any combination of the above two media. The computer-readable storage medium may be, for example, but is not limited to, an electronic, magnetic, optical, electromagnetic, infrared, or semiconducting system, apparatus, or device, or any combination of the foregoing. The more specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present invention, the computer-readable storage medium may be any tangible medium that can contain or store a program for use by or in connection with an instruction execution system, apparatus, or device. In the present invention, the computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal medium may also be any computer-readable medium other than computer-readable storage media, which may send, propagate or transport a program for use by or in conjunction with an instruction execution system, apparatus or device. The program code embodied on the computer-readable medium may be transmitted using any appropriate medium, including but not limited to: a wire, an optical cable, a radio frequency (RF), or the like, or any suitable combination of the foregoing.

The above-mentioned computer-readable medium may be included in the above-mentioned electronic device, or may exist independently without being incorporated into the electronic device.

The above-mentioned computer-readable medium carries one or more programs. When the one or more programs are executed by the electronic device, the electronic device is configured to execute the method shown in the above embodiments.

According to one aspect of the present invention, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations in the present invention may be written in one or more programming languages or their combination, including object-oriented programming languages such as Java, Smalltalk, C++, or conventional procedural programming languages such as "C" or similar programming languages. The program codes may be executed entirely on a user computer, partly on the user computer, as a stand-alone software package, partly on the user computer and partly on a remote computer, or entirely on the remote computer or a server. In case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions, and operations of systems, methods, and computer program products according to various embodiments of the present invention. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the drawings. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules described and involved in the embodiments of the present invention may be implemented in software or hardware. The name of a module does not, in some cases, constitute a limitation on the module itself. For example, module A can also be described as "module A for performing operation B".

The above description is only a preferred embodiment of the present invention and an illustration of the technical principles used. The scope of the invention is defined by the appended claims.

## Claims

1. A communication method, performed by a transmitter, comprising:
sending (101, 202, 302) a first data frame in a first communication link with a receiver; and
sending (102, 203, 303) a first block acknowledgement request, BA Request, frame corresponding to the first data frame in a second communication link with the receiver, wherein the first communication link and the second communication link belong to a simultaneous transmit and receive, STR, link pair;
**characterized in that** before sending (202, 302) the first data frame in the first communication link with the receiver, the method comprises:
sending (201, 301) an add BA Request frame to the receiver in the first communication link, wherein the add BA Request frame comprises initial bitmap information and an initial BA starting sequence number, wherein the initial bitmap information indicates a size of a BA buffer;
wherein the first BA Request frame comprises:
a first BA starting sequence number; and
first bitmap information,
wherein the first BA starting sequence number is the same as the initial BA starting sequence number, and the number of bytes indicated by the first bitmap information is less than that indicated by the initial bitmap information.

2. The communication method according to claim 1, after sending (201) the add BA Request frame to the receiver in the first communication link, the method comprising:
receiving an add BA response frame sent by the receiver.

3. The communication method according to claim 1 or 2, after sending (303) the first BA Request frame corresponding to the first data frame in the second communication link with the receiver, the method comprising:
receiving (304) a BA frame in the second communication link; and
in response to the BA frame, sending (305) a second BA Request frame in the second communication link.

4. The communication method according to claim 3, wherein the second BA Request frame comprises:
a second BA starting sequence number; and
second bitmap information,
wherein the second BA starting sequence number is a sum of the initial BA starting sequence number and a value of the size of the BA buffer indicated by the initial bitmap information, and the number of bytes indicated by the second bitmap information is less than that indicated by the initial bitmap information.

5. A communication method, performed by a receiver, comprising:
receiving (401, 502, 602) a first data frame in a first communication link with a transmitter; and
receiving (402, 503, 603) a first block acknowledgement request, BA Request, frame corresponding to the first data frame in a second communication link with the transmitter, wherein the first communication link and the second communication link belong to a simultaneous transmit and receive, STR, link pair;
**characterized in that** before receiving (502, 602) the first data frame in the first communication link with the transmitter, the method comprises:
receiving (501, 601) an add BA Request frame sent by the transmitter in the first communication link, wherein the add BA Request frame comprises initial bitmap information and an initial BA starting sequence number, wherein the initial bitmap information indicates a size of a BA buffer;
wherein the first BA Request frame comprises:
a first BA starting sequence number; and
first bitmap information,
wherein the first BA starting sequence number is the same as the initial BA starting sequence number, and the number of bytes indicated by the first bitmap information is less than that indicated by the initial bitmap information.

6. The communication method according to claim 5, after receiving (601) the add BA Request frame sent by the transmitter in the first communication link, the method comprising:
sending an add BA response frame to the receiver.

7. The communication method according to claim 5 or 6, after receiving (603) the first BA Request frame corresponding to the first data frame in the second communication link with the transmitter, the method comprising:
sending (604) a BA frame in the second communication link; and
receiving (605) a second BA Request frame in the second communication link.

8. The communication method according to claim 7, wherein the second BA Request frame comprises:
a second BA starting sequence number; and
second bitmap information,
wherein the second BA starting sequence number is a sum of the initial BA starting sequence number and a value of the size of the BA buffer indicated by the initial bitmap information, and the number of bytes indicated by the second bitmap information is less than that indicated by the initial bitmap information.

9. An electronic device, as a transmitter, configured to perform the method according to any one of claims 1 to 4.

10. An electronic device, as a receiver, configured to perform the method according to any one of claims 5 to 8.

11. A computer-readable storage medium, having stored therein a computer program that, when executed by a processor, causes the method according to any one of claims 1 to 8 to be performed.

## Patentansprüche

1. Kommunikationsverfahren, das von einem Sender durchgeführt wird, das folgende Schritte aufweist:
Senden (101, 202, 302) eines ersten Datenrahmens in einer ersten Kommunikationsverbindung mit einem Empfänger; und
Senden (102, 203, 303) eines ersten Blockbestätigungsanforderungs-, BA-Anforderungs-, Rahmens, der dem ersten Datenrahmen entspricht, in einer zweiten Kommunikationsverbindung mit dem Empfänger, wobei die erste Kommunikationsverbindung und die zweite Kommunikationsverbindung zu einem gleichzeitigen Sende- und Empfangs-, STR-, Verbindungspaar gehören;
**dadurch gekennzeichnet, dass** das Verfahren vor dem Senden (202, 302) des ersten Datenrahmens in der ersten Kommunikationsverbindung mit dem Empfänger folgenden Schritt aufweist:
Senden (201, 301) eines Hinzufügen-BA-Anforderungrahmens an den Empfänger in der ersten Kommunikationsverbindung, wobei der Hinzufügen-BA-Anforderungrahmen anfängliche Bitmap-Informationen und eine anfängliche BA-Startsequenznummer aufweist, wobei die anfänglichen Bitmap-Informationen eine Größe eines BA-Puffers angeben;
wobei der erste BA-Anforderungsrahmen Folgendes aufweist:
eine erste BA-Startsequenznummer; und
erste Bitmap-Informationen,
wobei die erste BA-Startsequenznummer die gleiche wie die anfängliche BA-Startsequenznummer ist und die Anzahl von Bytes, die durch die ersten Bitmap-Informationen angegeben wird, kleiner als die ist, die durch die anfänglichen Bitmap-Informationen angegeben wird.

2. Kommunikationsverfahren gemäß Anspruch 1, wobei das Verfahren nach dem Senden (201) des Hinzufügen-BA-Anforderungrahmens an den Empfänger in der ersten Kommunikationsverbindung folgenden Schritt aufweist:
Empfangen eines Hinzufügen-BA-Antwortrahmens, der durch den Empfänger gesendet wird.

3. Kommunikationsverfahren gemäß Anspruch 1 oder 2, wobei das Verfahren nach dem Senden (303) des ersten BA-Anforderungsrahmens, der dem ersten Datenrahmen entspricht, in der zweiten Kommunikationsverbindung mit dem Empfänger folgende Schritte aufweist:
Empfangen (304) eines BA-Rahmens in der zweiten Kommunikationsverbindung; und
ansprechend auf den BA-Rahmen, Senden (305) eines zweiten BA-Anforderungsrahmens in der zweiten Kommunikationsverbindung.

4. Kommunikationsverfahren gemäß Anspruch 3, wobei der zweite BA-Anforderungsrahmen Folgendes aufweist:
eine zweite BA-Startsequenznummer; und
zweite Bitmap-Informationen,
wobei die zweite BA-Startsequenznummer eine Summe der anfänglichen BA-Startsequenznummer und eines Wertes der Größe des BA-Puffers ist, der durch die anfänglichen Bitmap-Informationen angegeben wird, und die Anzahl von Bytes, die durch die zweiten Bitmap-Informationen angegeben wird, kleiner als die ist, die durch die anfänglichen Bitmap-Informationen angegeben wird.

5. Kommunikationsverfahren, das von einem Empfänger durchgeführt wird, das folgende Schritte aufweist:
Empfangen (401, 502, 602) eines ersten Datenrahmens in einer ersten Kommunikationsverbindung mit einem Sender; und
Empfangen (402, 503, 603) eines ersten Blockbestätigungsanforderungs-, BA-Anforderungs-, Rahmens, der dem ersten Datenrahmen entspricht, in einer zweiten Kommunikationsverbindung mit dem Sender, wobei die erste Kommunikationsverbindung und die zweite Kommunikationsverbindung zu einem gleichzeitigen Sende- und Empfangs-, STR-, Verbindungspaar gehören;
**dadurch gekennzeichnet, dass** das Verfahren vor dem Empfangen (502, 602) des ersten Datenrahmens in der ersten Kommunikationsverbindung mit dem Sender folgenden Schritt aufweist:
Empfangen (501, 601) eines Hinzufügen-BA-Anforderungrahmens, der durch den Sender in der ersten Kommunikationsverbindung gesendet wird, wobei der Hinzufügen-BA-Anforderungrahmen anfängliche Bitmap-Informationen und eine anfängliche BA-Startsequenznummer aufweist, wobei die anfänglichen Bitmap-Informationen eine Größe eines BA-Puffers angeben;
wobei der erste BA-Anforderungsrahmen Folgendes aufweist:
eine erste BA-Startsequenznummer; und
erste Bitmap-Informationen,
wobei die erste BA-Startsequenznummer die gleiche wie die anfängliche BA-Startsequenznummer ist und die Anzahl von Bytes, die durch die ersten Bitmap-Informationen angegeben wird, kleiner als die ist, die durch die anfänglichen Bitmap-Informationen angegeben wird.

6. Kommunikationsverfahren gemäß Anspruch 5, wobei das Verfahren nach dem Empfangen (601) des Hinzufügen-BA-Anforderungsrahmens, der von dem Sender in der ersten Kommunikationsverbindung gesendet wird, folgenden Schritt aufweist:
Senden eines Hinzufügen-BA-Antwortrahmens an den Empfänger.

7. Kommunikationsverfahren gemäß Anspruch 5 oder 6, wobei das Verfahren nach dem Empfangen (603) des ersten BA-Anforderungsrahmens, der dem ersten Datenrahmen in der zweiten Kommunikationsverbindung mit dem Sender entspricht, folgende Schritte aufweist:
Senden (604) eines BA-Rahmens in der zweiten Kommunikationsverbindung; und
Empfangen (605) eines zweiten BA-Anforderungsrahmens in der zweiten Kommunikationsverbindung.

8. Kommunikationsverfahren gemäß Anspruch 7, wobei der zweite BA-Anforderungsrahmen Folgendes aufweist:
eine zweite BA-Startsequenznummer; und
zweite Bitmap-Informationen,
wobei die zweite BA-Startsequenznummer eine Summe der anfänglichen BA-Startsequenznummer und eines Wertes der Größe des BA-Puffers ist, der durch die anfänglichen Bitmap-Informationen angegeben wird, und die Anzahl von Bytes, die durch die zweiten Bitmap-Informationen angegeben wird, kleiner als die ist, die durch die anfänglichen Bitmap-Informationen angegeben wird.

9. Elektronische Vorrichtung als Sender, die dazu konfiguriert ist, das Verfahren gemäß einem der Ansprüche 1 bis 4 durchzuführen.

10. Elektronische Vorrichtung als Empfänger, die dazu konfiguriert ist, das Verfahren gemäß einem der Ansprüche 5 bis 8 durchzuführen.

11. Computerlesbares Speichermedium, auf dem ein Computerprogramm gespeichert ist, das, wenn es von einem Prozessor ausgeführt wird, bewirkt, dass das Verfahren gemäß einem der Ansprüche 1 bis 8 durchgeführt wird.

## Revendications

1. Procédé de communication, mis en œuvre par un émetteur, comprenant :
l'envoi (101, 202, 302) d'une première trame de données dans une première liaison de communication avec un récepteur ; et
l'envoi (102, 203, 303) d'une trame première demande d'accusé de réception de bloc, Demande BA, correspondant à la première trame de données dans une deuxième liaison de communication avec le récepteur, dans lequel la première liaison de communication et la deuxième liaison de communication appartiennent à une paire de liaisons à transmission et réception simultanées, STR ;
**caractérisé en ce qu'**avant d'envoyer (202, 302) la première trame de données dans la première liaison de communication avec le récepteur, le procédé comprend :
l'envoi (201, 301) d'une trame de Demande BA d'ajout au récepteur dans la première liaison de communication, dans lequel la trame de Demande BA d'ajout comprend des informations de bitmap initiales et un numéro de séquence de démarrage BA initial, dans lequel les informations de bitmap initiales indiquent une taille d'un tampon BA ;
dans lequel la première trame de Demande BA comprend :
un premier numéro de séquence de démarrage BA ; et
des premières informations bitmap,
dans lequel le premier numéro de séquence de démarrage BA est identique au numéro de séquence de démarrage BA initial, et le nombre d'octets indiqué par les premières informations de bitmap est inférieur à celui indiqué par les informations de bitmap initiales.

2. Procédé de communication selon la revendication 1, après l'envoi (201) de la trame de Demande BA d'ajout au récepteur dans la première liaison de communication, le procédé comprenant : la réception d'une trame de réponse BA d'ajout envoyée par le récepteur.

3. Procédé de communication selon la revendication 1 ou 2, après l'envoi (303) de la première trame de Demande BA correspondant à la première trame de données dans la deuxième liaison de communication avec le récepteur, le procédé comprenant :
la réception (304) d'une trame BA dans la deuxième liaison de communication ; et
en réponse à la trame BA, l'envoi (305) d'une deuxième trame de Demande BA dans la deuxième liaison de communication.

4. Procédé de communication selon la revendication 3, dans lequel la deuxième trame de Demande BA comprend :
un deuxième numéro de séquence de démarrage BA ; et
des deuxièmes informations de bitmap,
dans lequel le deuxième numéro de séquence de démarrage BA est une somme du numéro de séquence de démarrage BA initial et d'une valeur de la taille du tampon BA indiquée par les informations de bitmap initiales, et le nombre d'octets indiqué par les deuxièmes informations de bitmap est inférieur à celui indiqué par les informations de bitmap initiales.

5. Procédé de communication, mis en œuvre par un récepteur, comprenant :
la réception (401, 502, 602) d'une première trame de données dans une première liaison de communication avec un émetteur ; et
la réception (402, 503, 603) d'une trame première demande d'accusé de réception de bloc, Demande BA, correspondant à la première trame de données dans une deuxième liaison de communication avec l'émetteur, dans lequel la première liaison de communication et la deuxième liaison de communication appartiennent à une paire de liaisons à transmission et réception simultanées, STR ;
**caractérisé en ce qu'**avant de recevoir (502, 602) la première trame de données dans la première liaison de communication avec l'émetteur, le procédé comprend :
la réception (501, 601) d'une trame de Demande BA d'ajout envoyée par l'émetteur dans la première liaison de communication, dans lequel la trame de Demande BA d'ajout comprend des informations de bitmap initiales et un numéro de séquence de démarrage BA initial, dans lequel les informations de bitmap initiales indiquent une taille d'un tampon BA ;
dans lequel la première trame de Demande BA comprend :
un premier numéro de séquence de démarrage BA ; et
des premières informations bitmap,
dans lequel le premier numéro de séquence de démarrage BA est identique au numéro de séquence de démarrage BA initial, et le nombre d'octets indiqué par les premières informations de bitmap est inférieur à celui indiqué par les informations de bitmap initiales.

6. Procédé de communication selon la revendication 5, après la réception (601) de la trame de Demande BA d'ajout envoyée par l'émetteur dans la première liaison de communication, le procédé comprenant :
l'envoi d'une trame de réponse BA d'ajout vers le récepteur.

7. Procédé de communication selon la revendication 5 ou 6, après la réception (603) de la première trame de Demande BA correspondant à la première trame de données dans la deuxième liaison de communication avec l'émetteur, le procédé comprenant :
l'envoi (604) d'une trame BA dans la deuxième liaison de communication ; et
la réception (605) d'une deuxième trame de Demande BA dans la deuxième liaison de communication.

8. Procédé de communication selon la revendication 7, dans lequel la deuxième trame de Demande BA comprend :
un deuxième numéro de séquence de démarrage BA ; et
des deuxièmes informations de bitmap,
dans lequel le deuxième numéro de séquence de démarrage BA est une somme du numéro de séquence de démarrage BA initial et d'une valeur de la taille du tampon BA indiquée par les informations de bitmap initiales, et le nombre d'octets indiqué par les deuxièmes informations de bitmap est inférieur à celui indiqué par les informations de bitmap initiales.

9. Dispositif électronique, tel qu'un émetteur, configuré pour mettre en œuvre le procédé selon l'une quelconque des revendications 1 à 4.

10. Dispositif électronique, tel qu'un récepteur, configuré pour mettre en œuvre le procédé selon l'une quelconque des revendications 5 à 8.

11. Support de stockage lisible par ordinateur, sur lequel est stocké un programme informatique qui, lorsqu'il est exécuté par un processeur, amène l'exécution du procédé selon l'une quelconque des revendications 1 à 8.
